Europäisches Patentamt

European Patent Office

Office européen des brevets

(19)

(11) Numéro de publication: **0 283 357 B1**

(12) **FASCICULE DE BREVET EUROPEEN**

(45) Date de publication de fascicule du brevet: **25.11.92**

(51) Int. Cl.⁵: **B01D 53/34**, C01B 17/775

(21) Numéro de dépôt: **88400419.3**

(22) Date de dépôt: **24.02.88**

(54) **Procédé et installation de traitement d'effluents gazeux contenant du dioxyde de soufre par l'oxygène.**

(30) Priorité: **25.02.87 FR 8702491**

(43) Date de publication de la demande:
**21.09.88 Bulletin 88/38**

(45) Mention de la délivrance du brevet:
**25.11.92 Bulletin 92/48**

(84) Etats contractants désignés:
**AT BE CH DE ES FR GB GR IT LI LU NL SE**

(56) Documents cités:
**DE-A- 2 951 425**
**FR-A- 2 186 285**
**US-A- 4 076 793**

(73) Titulaire: **L'AIR LIOUIDE, SOCIETE ANONYME POUR L'ETUDE ET L'EXPLOITATION DES PROCEDES GEORGES CLAUDE**
**75, Ouai d'Orsay**
**F-75321 Paris Cédex 07(FR)**

(72) Inventeur: **Ledon, Henry**
**31, rue E.Pons**
**F-69004 Lyon(FR)**
Inventeur: **Louise, Jean**
**22 allée des Plantes**
**F-94800 Villejuif(FR)**
Inventeur: **Cocolios, Panayotis**
**44, rue de Marcoussis**
**F-91470 Limours(FR)**

(74) Mandataire: **Le Moenner, Gabriel et al**
**L'AIR LIOUIDE, Société Anonyme pour l'étude et l'exploitation des procédés Georges Claude 75, Ouai d'Orsay**
**F-75321 Paris Cédex 07(FR)**

EP 0 283 357 B1

Rank Xerox (UK) Business Services

**Description**

La présente invention a pour objet un procédé de traitement d'épuration d'effluents gazeux contenant du dioxyde de soufre.

Les combustibles fossiles et plus particulièrement le fuel lourd, sont la cause principale des émissions de dioxyde de soufre. A cecil, il convient d'ajouter les industries utilisant ou consommant du soufre ou ses combinaisons minérales, tels que les industries de synthèse de l'acide sulfurique par combustion de soufre, du grillage des minerais, de calcination de certains sels minéraux, la sidérurgie, etc... Or les rejets atmosphériques d'effluents gazeux contenant du dioxyde de soufre constituent une source considérable de pollution, et sont responsables de graves dommages à l'environnement.

L'oxydation du dioxyde de soufre par l'oxygène est lente et de nombreuses technologies de traitement d'effluents gazeux ont pour principe l'absorption du dioxyde de soufre par un composé basique solide ou sous forme de suspension aqueuse. La combinaison solide ou liquide ainsi obtenue, est séparée mécaniquement du flux gazeux, puis éventuellement traitée. Dans ces conditions, il reste à éliminer ces composés, non valorisables, de façon acceptable au plan économique et écologique.

Un second mode d'épuration consiste à oxyder le dioxyde de soufre par l'oxygène ou l'air en milieu aqueux, ce qui conduit à l'obtention d'une solution plus ou moins diluée d'acide sulfurique susceptible d'être valorisé.

FR-A-2.058.158 décrit un procédé d'épuration de fumées contenant du dioxyde de soufre, consistant lors d'une première étape en une réaction avec de l'ozone transporté par un fluide porteur tel que l'oxygène, et dans une deuxième étape une mise en contact des fumées avec une solution d'acide sulfurique.

Cependant, pour réaliser cette oxydation avec une cinétique compatible avec les contingences d'une exploitation industrielle, il est nécessaire d'ajouter des catalyseurs au milieu d'oxydation, de préférence des sels métalliques, et en particulier, des sels de manganèse.

Par FR-A-2.186.285, on connait un procédé selon lequel l'effluent gazeux contenant du dioxyde de soufre est mis en contact avec une solution diluée d'acide sulfurique en présence de sulfate de manganèse préalablement oxydée par de l'ozone,

L'épuration d'effluents gazeux contenant du dixoyde de soufre, par réaction catalytique d'oxydation conduisant à une solution plus ou moins concentrée d'acide sulfurique, a fait l'objet de nombreuses études.

FR-A-2.238.669 décrit l'oxydation d'un effluent gazeux contenant de l'oxygène et du dioxyde de soufre par contact prolongé avec une solution d'acide sulfurique dilué contenant du sulfate de manganèse.

Bien que cette méthode permette théoriquement, la valorisation du dioxyde de soufre contenu dans les effluents gazeux, sa mise en oeuvre pratique pose divers problèmes. Les quantités de catalyseurs employées sont importantes, de plus, l'acide sulfurique recueilli est relativement dilué et contient un taux d'impuretés élevé provenant du catalyseur résiduel. L'obtention d'acide sulfurique commercialisable à partir d'un tel procédé requèrerait la mise en oeuvre d'une ou plusieurs étapes de purification pour éliminer les catalyseurs, et une étape de concentration pour arriver à un titre d'acide acceptable. Il est clair que ces étapes obèreraient de façon notable l'économie globale du procédé.

FR-A-2.323.632 propose un procédé de traitement d'effluents gazeux contenant du dioxyde de soufre comprenant la mise en contact des dits effluents avec une solution aqueuse d'acide sulfurique en présence d'oxygène ou d'air et d'un catalyseur tel qu'un sel minéral de manganèse, selon lequel la solution aqueuse d'acide sulfurique obtenue après contact et contenant le dioxyde de soufre est soumise à l'action d'un initiateur d'oxydation du type rayonnement ionisant. La solution d'acide sulfurique est irradiée soit par une source de rayonnement ionisant provenant des rayons X, des rayons gamma d'isotopes radioactifs tels que $^{60}Co$, $^{137}Cs$, ainsi, que du rayonnement de freinage d'un accélérateur de particules chargées. Suivant le procédé on peut atteindre un degré du purification des gaz supérieur à 0,95, tout en obtenant de l'acide sulfurique à une concentration allant jusqu'à 50 %.

Ce procédé ne semble présenter qu'un intérêt scientifique de laboratoire, car sa mise en exploitation à l'échelle industrielle est tout à fait inenvisageable en raison de divers inconvénients majeurs. Le traitement par irradiation de volumes importants d'acide sulfurique a pour conséquence une lourdeur d'installation sur le site d'épuration d'un coût et d'un investissement très élevés. En outre, la mise en oeuvre de rayons X ou gamma sur un site industriel est dangereuse, et pose de très sérieux problèmes de sécurité pour le personnel.

Suite à ces observations et considérant que l'espèce active responsable de l'oxydation du dioxyde de soufre par l'oxygène est un ion de manganèse de degré d'oxydation supérieur à +II : $Mn^{n+}$, il a été recherché un procédé d'épuration industriel économiquement valable, d'un rendement très élevé, supérieur à 99 % et conduisant à l'obtention d'une solution d'acide sulfurique de titre élevé directement valorisable sans traitement ultérieur en utilisant une concentration minimale de catalyseur.

Selon le procédé proposé, le traitement d'épuration d'effluents gazeux contenant du dioxyde de soufre comprenant la mise en contact des dits effluents gazeux avec une solution d'acide sulfurique en présence d'oxygène et d'un système catalytique à base de sels de manganèse, est caractérisé en ce que l'oxydation catalytique du dioxyde de soufre par de l'oxygène est mise en oeuvre en milieu sulfurique concentré, en présence d'un système engendré par l'électro oxydation de sels de manganèse $Mn^{2+}$.

Il a été constaté que l'emploi d'une solution de sulfate de manganèse $MnSO_4, H_2O$ dans l'acide sulfurique non électrolysée ne permet pas l'oxydation du dioxyde de soufre. Par contre, il a été observé l'oxydation d'au moins 15 moles de $SO_2$, par mole d'électrons fournie par l'électrolyseur, ce qui confirme le rôle catalytique de l'espèce active produit par électrooxydation du manganèse à un degré d'oxydation supérieur à + II.

De plus, l'emploi de l'air à la place de l'oxygène pour l'oxydation du dioxyde de soufre conduit à ses rendements d'épuration très faibles. Et, si l'on substitue l'oxygène par de l'azote la conversion est nulle. Par oxygène, on désigne un gaz ou un mélange de gaz contenant au moins 80 % d'oxygène, et de préférence au moins 90 %.

L'espèce active sous forme de l'ion $Mn^{n+}$ est engendré par oxydation électrolytique de l'ion manganeux en milieu sulfurique concentré. Cette génération électrochimique de l'espèce active $Mn^{n+}$ est réalisée par électrolyse d'une solution sulfurique de sulfate de manganèse $MnSO_4, H_2O$, dans un électrolyseur composé de deux compartiments séparés. Les électrodes peuvent, par exemple, être constituées par une grille de titane platiné pour l'anode, et d'une grille de platine ou d'une feuille d'acier inoxydable pour la cathode. Le choix des matériaux tels que la plomb ou le titane recouvert par des métaux précieux ou par du dioxyde de plomb sont également d'un type convenable. Le potentiel appliqué entre les deux électrodes peut varier de 1,5 à 3 volts, mais il est de préférence compris entre 1,8 et 2,2 volts.

L'espèce active est préparée en continu ou en discontinu, et elle est ransférée dans le cycle de traitement d'épuration de l'effluent gazeux en quantité choisie et déterminée en fonction de la teneur en dioxyde de soufre de l'effluent gazeux à épurer. Ainsi, à titre d'exemple, pour une teneur en dioxyde de soufre comprise entre 400 et 10.000 parties par million (ppmV) la quantité de manganèse peut être comprise entre 18 et 64 mg par litre d'acide sulfurique de lavage avec un rendement d'épuration supérieur à 99 %.

L'oxydation catalytique de l'effluent contenant du dioxyde de soufre par l'oxygène, est très avantageusement mise en oeuvre dans une zone d'oxydation préalablement imprégnée par le milieur sulfurique concentré, contenant le système catalytique activé électrochimiquement. Dans le cas contraire, correspondant à l'introduction de l'effluent contenant le $SO_2$ dans la zone d'oxydation suivie de l'apport dans cette zone du milieu sulfurique contenant $Mn^{n+}$, aucune oxydation significative n'a été observée.

Selon une option avantaguese on peut envisager de conduire l'oxydation catalytique de l'effluent sous pression d'oxygène, peu élevée, de préférence comprise 0,2 et 1 MPa.

Il a été trouvé que l'apport de faibles quantités d'ozone améliore nettement le pouvoir catalytique du système d'oxydation d'effluents contenant du dioxyde de soufre par l'oxygène en présence de l'espèce catalytique active engendrée électrochimiquement $Mn^{n+}$. Selon une variante, on conduit l'oxydation catalytique en présence de faibles quantités d'ozone véhiculé dans l'oxygène comme fluide porteur de l'ordre de 40 à 80 mg par heure, à rendement d'oxydation constant de l'ordre d'au moins 99 %.

Dans l'ensemble des conditions d'un procédé continu y compris les variantes, on peut avantageusement prévoir au moins un des recyclages suivants :

- recyclage du milieu sulfurique dans la zone d'oxydation et éventuellement dans la zone de lavage de l'effluent à épurer; recyclage du catalyseur vers la cellule d'électrolyse, par injection dans l'acide sulfurique, voir même le recyclage de l'oxygène dans la zone d'oxydation.

On peut aussi envisager de réaliser en continu l'oxydation catalytique dans une ou plusieurs zones d'oxydation successives ; éventuellement avec introduction intermédiaire du système catalytique entre les zones d'oxydation, ou avec introduction intermédiaire de l'ozone entre les dites zones d'oxydation, ou avec introduction intermédiaire du système catalytique et de l'ozone.

Le procédé d'épuration d'effluents pollués et l'obtention d'acide sulfurique directement valorisable peut être mis en oeuvre dans divers types d'installations décrites à titre non limitatif et représentées sur les figures annexées.

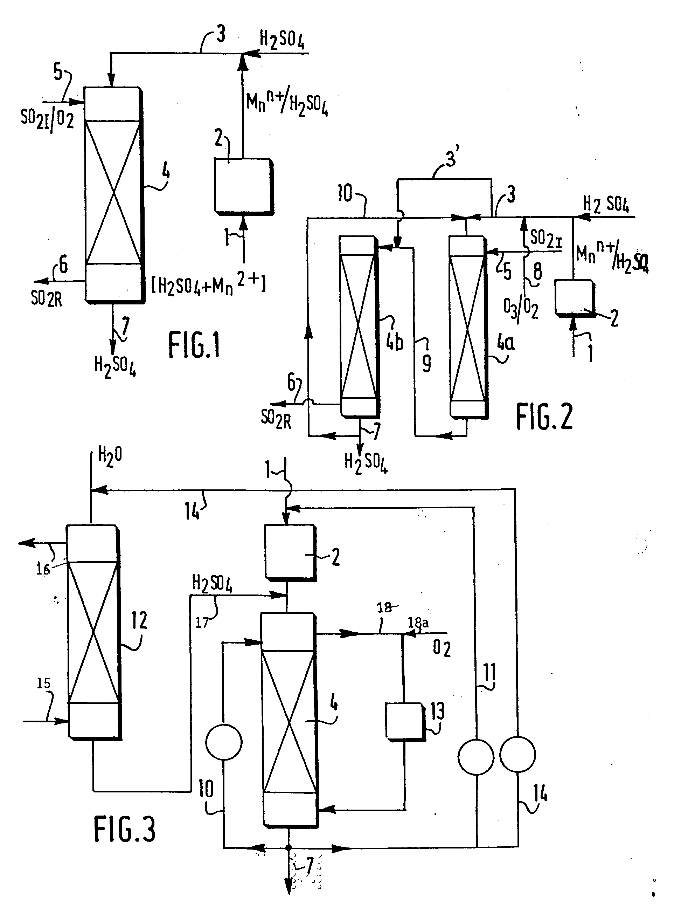

Dans l'installation de la figure 1, l'espèce catalytique active $Mn^{n+}$ est préparée dans le compartiment anodique de l'électrolyseur (2), la solution d'acide sulfurique contenant le sulfate de manganèse étant introduite dans l'électrolyseur par la conduite (1). La solution de manganèse électrochimiquement activée, est injectée dans le circuit d'acide sulfurique (3), par une pompe doseuse non représentée. Cette solution d'acide sulfurique contenant $Mn^{n+}$ est introduite dans la colonne d'oxydation (4) et imprègne le garnissage, par exemple constitué d'anneaux de verre, ou les plateaux. Ensuite, on introduit dans l'oxydeur, l'effluent gazeux contenant le dioxyde de soufre (5) dans un courant d'oxygène pur, à co-courant avec la solution d'acide sulfurique contenant $Mn^{n+}$. L'effluent épuré est recueilli en (6) à la partie inférieure de l'oxydeur et l'acide sulfurique commercialement valorisable en (7) à la base de l'oxydeur.

La mise en oeuvre du procédé d'épuration dans deux zones d'oxydation successives, en présence d'ozone, avec recyclage éventuel de l'acide sulfurique, peut être réalisée dans une installation représentée sur la figure 2.

L'installation comprend comme précédemment un électrolyseur (2) alimenté par une solution de $H_2SO_4$ + $MnSO_4$ par la conduite (1), la solution $Mn^{n+}/H_2SO_4$ engendrée dans l'électrolyseur est introduite par l'intermédiaire d'une pompe doseuse, non représentée, dans la conduite d'acide sulfurique (3), vers la première colonne d'oxydation (4a). Le courant gazeux ozone-oxygène $O_3 / O_2$ est introduit par l'intermédiaire de la conduite (8) dans la conduite (3) véhiculant $Mn^{n+}/H_2SO_4$. L'effluent à traiter$(SO_2)_I$ est introduit à la partie supérieure de la colonne (4 a), le milieu liquide soutiré à la base de cette colonne est véhiculé par le circuit (9) vers la partie supérieur de la seconde colonne d'oxydation (4b). L'effluent propre est évacué à la partie inférieure de la colonne (4b) et l'acide sulfurique valorisable à la base de la dite colonne par la conduite (7) sur laquelle est prélevée une partie de l'acide sulfurique concentré recyclé par la conduite (10) vers la première colonne d'oxydation. Optionnellement, une introduction intermédiaire du système catalytique et de l'ozone peut être réalisée en tête de la colonne (4b) par l'intermédiaire de la conduite (3').

Dans le cas de la mise en oeuvre du procédé avec oxydation par l'oxygène et recyclage du catalyseur, de l'acide sulfurique et de l'oxygène, ce procédé de traitement peut être exploité dans une installation représentée sur la figure 3.

Cette installation comprend un laveur (12), un électrolyseur (2), une colonne d'oxydation (4), et les circuits afférents d'entrée et de sortie des divers fluides. L'installation comprend en outre un circuit d'oxygène (18) correspondant à une simple boucle éventuellement avec recompression (13) quant le procédé est conduit sous pression et appoint en oxygène (18a) ; un circuit d'acide sulfurique correspondant à une simple boucle (10) un circuit (11) de recyclage du catalyseur vers l'électrolyseur (2) ; et un circuit de recyclage d'acide sulfurique (14) en tête de laveur ; le gaz à épurer étant introduit à la base du laveur(15), et le gaz épuré récupéré à la partie supérieure (16).

Le procédé décrit trouve son application dans l'épuration des effluents pollués par le dioxyde de soufre, avec récupération du $SO_2$ sous forme d'acide sulfurique directment valorisable et l'obtention d'effluents propres.

Dans le cas, du traitement des effluents permanents de la pyrolyse de sulfates minéraux en vue d'obtenir les oxydes correspondants, l'acide sulfurique recueilli par le procédé peut être recyclé avantageusement dans l'étape de préparation des dits sulfates.

Il est donné ci-après des exemples non limitatifs du procédé de l'invention.

Exemple 1
____

Préparation du catalyseur.

On réalise l'oxydation du sulfate de manganèse $MnSO_4$, $H_2O$ en discontinu dans un électrolyseur à compartiment anodique et cathodique parallèles séparés par une membrane échangeuse d'ions ; passage du courant étant assuré par une alimentation stabilisée.

Le volume utile de chacun des compartiments est identiques et de 80 ml. L'anode est constituée par une grille de titane platiné Pt/Ti, et la cathode par une grille de platine. On applique entre les deux électrodes un potentiel de $2,0^+$ 0,2 volts. Un courant d'azote agit comme promoteur de turbulence.

La solution d'acide sulfurique de concentration 36,5 % en poids contient 0,1 mole (16,9 g/l) de $MnSO_4$, $H_2O$, on électrolyse un volume de solution de 60 ml pendant une durée de 30 minutes. L'évolution de la coloration de la solution incolore au départ, au rouge cerise à la fin de l'électrolyse, ainsi que l'obtention d'un courant stable au bout de 30 minutes servent d'indicateurs de fin de réaction.

Exemple 2
____

Les essais ont été réalisés dans l'installation représentée sur la figure 1.

Dans une première série d'essais d'oxydation en continu, on procède à l'étude de la quantité nécessaire de manganèse électrochimiquement activé nécessaire pour oxyder, en présence d'oxygène pur à 99,5 %, des effluents contenant des taux croissants de dioxyde de soufre avec une efficacité supérieure à 99,5 %.

Avec un débit de gaz total de 11 l/h et un temps de contact de 7 secondes, moins de 25 mg/l de manganèse sont nécessaires pour oxyder des quantités de $SO_2$ allant jusqu'à 1 000 ppmV. L'acide sulfurique recueilli titre 45 % en poids. Les résultats obtenus sont consignés dans le tableau I. Les concentrations de $SO_2$ en sortie de l'oxydeur ont été déterminées en continu par conductimétrie.

Le rendement de l'épuration est défini selon le rapport :

$$Rdt = \frac{(SO_2)_I - (SO_2)_R}{(SO_2)_I} \times 100$$

dans lequel $(SO_2)_I$ est la concentration de $SO_2$ à l'entrée de l'oxydeur et $(SO_2)_R$ est la concentration résiduelle de $SO_2$ à la sortie de l'oxydeur, corrigée de la solubilité de $SO_2$ dans l'acide sulfurique.

(Mn) désigne la concentration totale de manganèse (indépendamment du degré d'oxydation des espèces présentes en solution) dans la solution sulfurique.

<div align="center">TABLEAU I</div>

| (Mn) | | $(SO_2)_I$ | | Rdt |
|---|---|---|---|---|
| $X\ 10^3 M$ | mg/l | ppmV | mg/lxh | % |
| 0,337 (X) | 18,5 | 400 | 73,5 | 0 |
| 0,337 | 18,5 | 400 | 73,5 | 99,8 |
| 0,346 | 19 | 800 | 147 | 99,5 |
| 0,801 | 44 | 1200 | 220 | 99,7 |
| 0,983 | 54 | 1600 | 294 | 99,6 |
| 1,656 | 91 | 2000 | 367 | 99,5 |

(X) Sans activation électrochimique du sulfate de manganése

Lors d'une deuxième série d'essais d'oxydation en continu, avec de l'oxygène pur et un débit de gaz total de 5 l/h, et un temps de contact de 30 secondes, il a été constaté que 32 mg/l de manganèse suffisent pour oxyder 2 000 ppmV de $SO_2$ à 97 %. En doublant la quantité de manganèse, il a été possible d'oxyder 4 000 ppmV de $SO_2$ avec le même taux de conversion. Dans ce dernier cas, le taux d'épuration chute en dessous de 95 % pour des concentrations en $SO_2$ supérieurs à 4 000 ppm V.

Dans cette série d'essais, l'acide sulfurique recueillie titre 50 % en poids.

## TABLEAU II

| (Mn) | | $(SO_2)_I$ | | | $(SO_2)_{OX}$ | | Rdt | | $NRh^{-1}$ |
|---|---|---|---|---|---|---|---|---|---|
| $x10^3M$ (mg/1) | | ppmV | $x10^3M$ (mg/1xh) | | $x10^3M$ | | % | | |
| 0,582 (32) | | 2000 | 2,59 (166) | | 2,52 | | 97 | | 4,3 |
| 0,582 (32) | | 3000 | 3,89 (249) | | 3,70 | | 95,3 | | 6,4 |
| 0,582 (32) | | 4000 | 5,20 (333) | | 3,54 | | 68 | | 6,1 |
| 0,582 (32) | | 5000 | 6,50 (416) | | 3,84 | | 59 | | 6,6 |
| 1,165 (64) | | 2000 | 2,59 (166) | | 2,58 | | 99,8 | | 2,2 |
| 1,165 (64) | | 3000 | 3,89 (249) | | 3,88 | | 99,7 | | 3,3 |
| 1,165 (64) | | 4000 | 5,20 (333) | | 5,04 | | 97 | | 4,3 |
| 1,165 (64) | | 5000 | 6,50 (416) | | 4,88 | | 75 | | 4,2 |

$(SO_2)_{OX}$ désigne la concentration de $SO_2$ oxydé = $(SO_2)_I$ - $(SO_2)_R$

$NRh^{-1}$ Nombre de notations horaires

$$NR = \frac{\text{Nombre de moles de SO2 oxydés}}{\text{Nombre de moles de manganèse}}$$

Les résultats de ces essais montrent que le $SO_2$ contenu dans des effluents est oxydé par l'oxygène pur en milieu acide sulfurique concentré en présence de $Mn^{n+}$ électrochimiquement prépare. De plus, les valeurs du nombre de rotations horaires mettent en évidence l'effet catalytique du manganèse sur la réaction. Pour des conditions non optimisées de l'oxydeur, on atteint la valeur de 6,6 moles de $SO_2$ oxydées par mole de manganèse introduit. Les taux de conversion obtenus dépendent du temps de contact gaz/liquide ; les variations constatées dans les deux séries d'essais montrent clairement cet effet.

Exemple 3

Effet de synergie avec l'ozone.

Les essais en continu ont été réalisés dans l'installation représentée sur la figure 2, alimentée en oxygène pur.

La source d'ozone a les caractéristiques suivantes : lampes UV 2,5 W, 1 mg/l $O_3$ par lampe pour 10 l/h d'oxygène.

Le débit de gaz total est de 25 litres par heure et le temps de contact de 19 secondes.

Les résultats de la première série d'essais sont consignés dans le tableau III.

TABLEAU III

| (Mn) | $Q_{O_3}$ | $(SO_2)_I$ | | $(SO_2)_{OX}$ | Rdt | $NRh^{-1}$ |
|---|---|---|---|---|---|---|
| $x10^3$M (mg/l) | mg/h | ppmV | $x10^3$M(mg/lxh) | $x\ 10^3$M | % | |
| 0,582 (32) | – | 5000 | 6,5 (416) | 3,84 | 59 | 6,6 |
| 1,165 (64) | – | 5000 | 6,5 (416) | 4,88 | 75 | 4,2 |
| 0,310 (17) | 80* | 10000 | 13 (832) | 12,06 | 92,8 | 39,0 |
| 0,620 (34) | 80 | 10000 | 13 (832) | 12,87 | 99 | 20,8 |

* $1,66 \times 10^{-3}$ mole.

A titre de comparaison, figurent également dans ce tableau deux résultats d'essais significatifs extraits du tableau II précédent, effectués en absence d'ozone.

On constate que si dans le meilleur des cas, avec 0,582 mmole de manganèse on oxyde 3,84 mmoles de $SO_2$ en absence d'ozone, soit un rendement de 59 %, avec 0,620 mmole de manganèse, on parvient à transformer 12,87 mmoles de $SO_2$ soit un rendement de 99 %, en introduisant dans l'oxydeur 1,66 mmole/h (80 mg) d'ozone. Ces résultats font apparaitre l'effet catalytique de l'ozone sur l'oxydation de $SO_2$ par l'oxygène, en présence de $Mn^{2+}$ électrochimiquement activé ; et la synergie entre l'ozone et $Mn^{n+}$.

Dans une deuxième série d'esssais on a recyclé plusieurs fois la solution d'acide sulfurique recueillie, contenant seulement 0,620 mmole/l de Mn, et poursuivi l'oxydation avec toujours la même quantité de $SO_2$ (13 mmoles/lxh) et des quantités variables d'ozone.

Le débit total de gaz est toujours de 25 litres par heure et le temps de contact environ 19 secondes.

Les résultats obtenus sont consignés dans le tableau IV.

### TABLEAU IV

| $Q_{O_3}$ | | $(SO_2)_I$ | | $(SO_2)_{OX}$ | Rdt |
|---|---|---|---|---|---|
| $x10^3 M$(mg/h) | ppmV | $x10^3 M$(mg/lxh) | | $x10^3 M$ | % |
| 1,67 (80) | 10000 | 13 (832) | | 12,87 | 99 |
| 1,25 (60) | 10000 | 13 (832) | | 12,87 | 99 |
| 0,83 (40) | 10000 | 13 (832) | | 12,81 | 98,5 |
| 0,42 (20) | 10000 | 13 (832) | | * | * |

\* Le taux d'épuration décroît de manière continue en dessous de 40 mg/heure d'ozone. A rendement constant, la quantité favorable d'ozone dans l'oxygène est comprise entre 40 et 80 mg/heure. De la lecture des résultats on constate que les taux d'épuration sont stables pour de longues périodes et atteignent 99 %.

## Revendications

1. Procédé de traitement d'épuration d'effluents gazeux contenant du dioxyde de soufre comprenant la mise en contact des dits effluents gazeux avec une solution d'acide sulfurique en présence d'oxygène et d'un système catalytique à base de sells de manganèse, caractérisé en ce que l'oxydation catalytique du dioxyde de soufre par de l'oxygène est misem en oeuvre dans une zone d'oxydation préalablement imprégnée par un milieu sulfurique concentré contenant un système catalytique engendré par électro oxydation de sels de manganèse $Mn^{2+}$ et mis en oeuvre en quantité choisie en fonction de la teneur en dioxyde de souffre, de l'effluent gazeux à épurer.

2. Procédé de traitement d'épuration d'effluents gazeux contenant du dioxyde de soufre selon la revendication 1, caractérisé en ce que l'oxydation catalytique de l'effluent gazeux est conduite sous une pression d'oxygène.

3. Procédé de traitement d'épuration d'effluents gazeux contenant du dioxyde de soufre selon une quelconque des revendications 1 à 2, caractérisé en ce que l'oxydation catalytique de l'effluent gazeux est conduite en présence de faibles quantités d'ozone véhiculée dans l'oxygène.

4. Procédé de traitement d'épuration d'effluents gazeux contenant du dioxyde de soufre selon une quelconque des revendications 1 à 3, caractérisé en ce que le procédé de traitement d'épuration est mis en oeuvre avec au moins un recyclage du groupe constitué par le recyclage du milieu sulfurique, du catalyseur et de l'oxygène.

5. Procédé de traitement d'épuration d'effluents gazeux contenant du dioxyde de soufre selon une quelconque des revendications 1 à 4, caractérisé en ce que l'oxydation catalytique de l'effluent gazeux est réalisée en continu dans une ou plusieurs zones d'oxydation successives.

6. Procédé de traitement d'épuration d'effluents gazeux contenant du dioxyde de soufre selon une quelconque des revendications 1 à 5 caractérisé en ce que l'oxydation catalytique de l'effluent gazeux est réalisée en continu dans plusieurs zones d'oxydation avec introduction intermédiaire du système catalytique entre les zones d'oxydation.

7. Procédé de traitement d'épuration d'effluents gazeux contenant du dioxyde de soufre selon une quelconque des revendications 1 à 6, caractérisé par une introduction intermédiaire d'ozone.

8. Procédé de traitement d'épuration d'effluents gazeux contenant du dioxyde de soufre selon une quelconque des revendications 1 à 7 caractérisé en ce que la concentration du système catalytique engendré par électro-oxydation dans le milieu sulfurique concentré est comprise entre 18,5 et 91 mg/l.

9. Installation de traitement d'effluents selon l'une des revendications 4 à 8 caractérisée en ce qu'elle comporte deux colonnes d'oxydation (4a) et (4b) reliées entre elles par un circuit (9), la partie supérieure de la première colonne d'oxydation (4a) étant reliée à un électrolyseur (2) et
a) à une conduite (3) véhiculant de l'acide sulfurique contenant le système catalytique électrochimiquement activé, ladite conduite (3) étant elle-même reliée avec ledit électrolyseur (2) et à une conduite (8) d'amenée d'oxygène et d'ozone.
b) à une conduite (5) d'amenée de l'effluent gazeux à traiter, la deuxième colonne d'oxydation (4b) étant munie en sa partie inférieure d'une conduite (6) pour l'évacuation de l'effluent traité, ainsi que d'une conduite (7) de sortie d'acide sulfurique, ladite conduite (7) de sortie d'acide sulfurique étant éventuellement reliée à une boucle de recyclage (10) de l'acide sulfurique débouchant dans la partie supérieure de la première colonne d'oxydation (4a).

10. Installation selon la revendication 9 caractérisée en ce que la conduite (3) véhiculant de l'acide sulfurique contenant le système catalytique électrochimiquement activé et le circuit (9) sont reliés au moyen d'une conduite intermédiaire (3').

11. Installation de traitement d'effluents selon l'une des revendications 4 à 8 caractérisée en ce qu'elle comporte une colonne d'oxydation (4) reliée à un électrolyseur (2) et à un circuit d'oxygène (18) muni le cas échéant d'un moyen de recompression (13), ladite colonne d'oxydation (4) étant reliée par une conduite (17) d'amenée d'acide sulfurique et un circuit (14) de recyclage d'acide suflurique, à un laveur (12) dans lequel le gaz à épurer (15) est introduit et d'ou sort le gaz épuré (16).

12. Installation de traitement d'effluents selon la revendication 11 caractérisé en ce que la colonne d'oxydation (4) comporte en outre un circuit d'acide sulfurique (10) et/ou un circuit de recyclage du catalyseur (11) vers l'électrolyseur (2) et/ou une conduite d'apport en oxygène (18a).

**Claims**

1. Treatment process for purifying gaseous effluents containing sulphur dioxide which comprises putting said gaseous effluents into contact with a sulphuric acid solution in the presence of oxygen and a manganese salt-based catalytic system, characterised in that the catalytic oxidation of the sulphur dioxide by the oxygen is carried out in an oxidation zone previously impregnated by a concentrated sulphuric medium containing a catalytic system generated by electro-oxidation of manganese salts $Mn^{2+}$ and carried out in the chosen quantity as a function of the sulphur dioxide content of the gaseous effluent to be purified.

2. Treatment process for purifying gaseous effluents containing sulphur dioxide according to claim 1, characterised in that the catalytic oxidation of the gaseous effluent is conducted under a pressure of oxygen.

3. Treatment process for purifying gaseous effluents containing sulphur dioxide according to any one of the claims 1 to 2, characterised in that the catalytic oxidation of the gaseous effluent is conducted in the presence of small quantities of ozone carried in the oxygen.

4. Treatment process for purifying gaseous effluents containing sulphur dioxide according to any one of the claims 1 to 3, characterised in that the purification treatment process is implemented with at least one recycling of the group set up by the recycling of the sulphuric medium, of the catalyst and of the oxygen.

**5.** Treatment process for purifying gaseous effluents containing sulphur dioxide according to any one of the claims 1 to 4, characterised in that the catalytic oxidation of the gaseous effluent is realized continuously in one or several successive oxidation zones.

**6.** Treatment process for purifying gaseous effluents containing sulphur dioxide according to any one of the claims 1 to 5, characterised in that the catalytic oxidation of the gaseous effluent is realized continuously in several oxidation zones with intermediate introduction of the catalytic system between the oxidation zones.

**7.** Treatment process for purifying gaseous effluents containing sulphur dioxide according to any one of the claims 1 to 6, characterised by an intermediate introduction of ozone.

**8.** Treatment process for purifying gaseous effluents containing sulphur dioxide according to any one of the claims 1 to 7, characterised in that the concentration of the catalytic system generated by electro-oxidation in the concentrated sulphuric medium is between 18.5 and 91 mg/l.

**9.** Installation for treating effluents according to one of the claims 4 to 8, characterised in that it comprises two oxidation columns (4a) and (4b) connected together by a circuit (9), the upper portion of the first oxidation column (4a) being connected to an electrolyzer outfit (2) and
a) to a conduit (3) carrying sulphuric acid containing the electrochemically activated catalytic system, said conduit (3) itself being connected to said electrolyzer outfit (2) and to a conduit (8) for supplying oxygen and ozone,
b) to a conduit (5) for supplying the gaseous effluent to be treated, the second oxidation column (4b) being provided in its lower portion with a conduit (6) for the evacuation of the treated effluent, as well as with a conduit (7) for the outflow of sulphuric acid, said conduit (7) for the outflow of sulphuric acid possibly being connected to a recycling loop (10) of the sulphuric acid running into the upper portion of the first oxidation column (4a).

**10.** Installation according to claim 9, characterised in that the conduit (3) carrying sulphuric acid containing the electrochemically activated catalytic system and the circuit (9) are connected by means of an intermediate conduit (3').

**11.** Installation for treating effluents according to one of the claims 4 to 8, characterised in that it comprises an oxidation column (4) connected to an electrolyzer outfit (2) and to an oxygen circuit (18) provided, if necessary, with a recompression means (13), said oxidation column (4) being connected, by means of a conduit (17) for supplying sulphuric acid and a circuit (14) for recycling sulphuric acid, to a washing apparatus (12) into which the gas to be purified (15) is introduced and out of which the purified gas (16) flows.

**12.** Installation for treating effluents according to claim 11, characterised in that the oxidation column (4) comprises, furthermore, a sulphuric acid circuit (10) and/or a recycling circuit of the catalyst (11) towards the electrolyzer outfit (2) and/or a conduit for supplying oxygen (18a).

**Patentansprüche**

**1.** Verfahren zur Reinigungsbehandlung von Abgasen mit einem Gehalt an Schwefeldioxid, bei dem man diese Abgase mit einer Schwefelsäurelösung in Gegenwart von Sauerstoff und eines katalytischen Systems auf der Grundlage von Mangansalzen in Berührung bringt, **dadurch gekennzeichnet,** daß die katalytische Oxidation des Schwefeldioxids mit dem Sauerstoff in einer Oxidationszone durchgeführt wird, die vorher mit einem konzentrierten Schwefelsäuremilieu, welches ein durch Elektrooxidation von Salzen von Mangan $Mn^{2+}$ erzeugtes katalytisches System enthält, imprägniert wurde, und mit einer in Funktion des Schwefeldioxidgehaltes ausgewählten Mengen des zu reinigenden Abgases durchgeführt wird.

**2.** Verfahren zur Reinigungsbehandlung von Abgasen mit einem Gehalt an Schwefeldioxid nach Anspruch 1, **dadurch gekennzeichnet,** daß die katalytische Oxidation des Abgases unter einem Sauerstoffdruck durchgeführt wird.

**3.** Verfahren zur Reinigungsbehandlung von Abgasen mit einem Gehalt an Schwefeldioxid nach einem der Ansprüche 1 bis 2, **dadurch gekennzeichnet,** daß die katalytische Oxidation des Abgases in Gegenwart geringer Mengen von in Sauerstoff befördertem Ozon durchgeführt wird.

**4.** Verfahren zur Reinigungsbehandlung von Abgasen mit einem Gehalt an Schwefeldioxid nach einem der Ansprüche 1 bis 3, **dadurch gekennzeichnet,** daß das Reinigungsbehandlungsverfahren mit mindestens einer Rückführung von Schwefelsäuremilieu, Katalystor und/oder Sauerstoff durchgeführt wird.

**5.** Verfahren zur Reinigungsbehandlung von Abgasen mit einem Gehalt an Schwefeldioxid nach einem der Ansprüche 1 bis 4, **dadurch gekennzeichnet,** daß die katalytische Oxidation des Abgases kontinuierlich in einer oder mehreren aufeinanderfolgenden Oxidationszonen durchgeführt wird.

**6.** Verfahren zur Reinigungsbehandlung von Abgasen mit einem Gehalt an Schwefeldioxid nach einem der Ansprüche 1 bis 5, **dadurch gekennzeichnet,** daß die katalytische Oxidation des Abgases kontinuierlich in mehreren Oxidationszonen unter Zwischeneinführung des katalytischen Systems zwischen den Oxidationszonen durchgeführt wird.

**7.** Verfahren zur Reinigungsbehandlung von Abgasen mit einem Gehalt an Schwefeldioxid nach einem der Ansprüche 1 bis 6, **gekennzeichnet durch** eine Zwischeneinführung von Ozon.

**8.** Verfahren zur Reinigungsbehandlung von Abgasen mit einem Gehalt an Schwefeldioxid nach einem der Ansprüche 1 bis 7, **dadurch gekennzeichnet,** daß die Konzentration des durch Elektrooxidation in dem konzentrierten Schwefelsäuremilieu erzeugten katalytischen Systems zwischen 18,5 und 91 mg/l liegt.

**9.** Vorrichtung zur Behandlung von Abgasen nach einem der Ansprüche 4 bis 8, **dadurch gekennzeichnet,** daß sie zwei Oxidationskolonnen (4a) und (4b) umfaßt, die untereinander durch einen Kreislauf (9) verbunden sind, wobei der obere Teil der ersten Oxidationskolonne (4a) mit einer Elektrolyseeinrichtung (2) und

a) einer Leitung (3), die die das elektrochemisch aktivierte katalytische System enthaltende Schwefelsäure befördert, wobei diese Leitung (3) selbst mit der besagten Elektrolyseeinrichtung (2) und einer Leitung (8) für die Zufuhr von Sauerstoff und Ozon verbunden ist, und
b) mit einer Leitung (5) für die Zufuhr von zu behandelndem Abgas verbunden ist und wobei die zweite Oxidationskolonne (4b) an ihrem unteren Teil mit einer Leitung (6) zum Abziehen des behandelten Abgases sowie einer Leitung (7) für den Austritt von Schwefelsäure versehen ist, wobei die Leitung (7) für den Austritt von Schwefelsäure gegebenenfalls mit einer Rückführschleife (10) für Schwefelsäure verbunden ist und diese Schleife in den oberen Teil der ersten Oxidationskolonne (4a) mündet.

**10.** Vorrichtung nach Anspruch 9, **dadurch gekennzeichnet,** daß die Leitung (3), die die das elektrochemisch aktivierte katalytische System enthaltende Schwefelsäure befördert, und die Leitung (9) mit Hilfe einer Zwischenleitung (3') verbunden sind.

**11.** Vorrichtung zur Behandlung von Abgasen nach einem der Ansprüche 4 bis 8, **dadurch gekennzeichnet,** daß sie eine Oxidationskolonne (4) umfaßt, welche mit einer Elektrolyseeinrichtung (2) und einem gegebenenfalls mit einer Nachverdichtungseinrichtung (13) versehenen Sauerstoffkreis (18) verbunden ist, wobei diese Oxidationskolonne (4) durch eine Leitung (17) für die Zufuhr von Schwefelsäure und einen Kreis (14) für die Rückführung von Schwefelsäure mit einem Wäscher (12) verbunden ist, in welchen das zu reinigende Gas (15) eingeführt wird und von wo das gereinigte Gas (16) austritt.

**12.** Vorrichtung zur Behandlung von Abgasen nach Anspruch 11, **dadurch gekennzeichnet,** daß die Oxidationskolonne (4) außerdem einen Schwefelsäurekreis (10) und/oder einen Katalysatorrückführkreis (11) zu der Elektrolyseeinrichtung (2) und/oder eine Leitung für die Zufuhr von Sauerstoff (18a) umfaßt.

FIG.1

FIG.2

FIG.3